# EUROPÄISCHE PATENTSCHRIFT

(11) **EP 0 561 802 B1**
(45) Veröffentlichungstag und Bekanntmachung des Hinweises auf die Patenterteilung: **24.08.1994**
(21) Anmeldenummer: 91919153.6
(22) Anmeldetag: 08.11.1991
(51) Int. Cl.: B62D 29/00, B62D 27/02, B62D 27/06, B62D 21/12, B60G 15/06

(54) **GUSSTEIL FÜR EINE FAHRZEUGKAROSSERIE**
CAST COMPONENT FOR MOTOR VEHICLE BODYWORK
PIECE COULEE POUR CARROSSERIE DE VEHICULE

(30) Priorität: 20.12.1990 DE 4041022
(43) Veröffentlichungstag der Anmeldung: 29.09.1993
(73) Patentinhaber: AUDI AG, 85002 Ingolstadt (DE)
(72) Erfinder: KREIS, Gundolf, D-8072 Oberstimm (DE); TIMM, Heinrich, D-8070 Ingolstadt (DE); ENNING, Norbert, D-8071 Denkendorf (DE); SPIES, Robert, D-8070 Ingolstadt (DE)
(74) Vertreter: Engelhardt, Harald
(86) Internationale Anmeldenummer: EP9102117
(87) Internationale Veröffentlichungsnummer: WO9211170

(56) Entgegenhaltungen:
- DE-A- 3 413 228
- FR-A- 556 458
- GB-A- 868 577
- GB-A- 941 164

## Beschreibung

Die Erfindung betrifft ein Verfahren zur Montage einer Fahrzeugkarosserie nach dem Oberbegriff des Anspruchs 1.

Übliche selbsttragende Fahrzeugkarosserien für Personenkraftwagen sind aus Blechteilen hergestellt. Träger mit Hohlprofilen werden dabei jeweils aus wenigstens zwei tiefgezogenen und miteinander verschweißten Blechen hergestellt. Die zum Aufbau solcher selbsttragenden Karosserien verwendeten Stahlbleche werden im Tiefziehverfahren verformt. Die Preßwerkzeuge zum Verformen der Bleche sind verhältnismäßig teuer, lassen jedoch hohe Stückzahlen zu, so daß für eine Großserienfertigung damit eine kostengünstige Lösung zur Verfügung steht. Aufgrund der hohen Werkzeuginvestitionen gestaltet sich das beschriebene Verfahren für Kleinserien jedoch sehr kostenintensiv.

Es ist daher insbesondere für Kleinserien bekannt (EP 0 146 716 B1), Fahrzeugkarosserien für Personenkraftwagen mit einer Tragstruktur aus Hohlprofilen herzustellen, welche durch Knotenelemente miteinander verbunden sind. Die Hohlprofile sind dabei als Leichtmetall-Strangprofile und die Knotenelemente als Leichtmetall-Gußteile ausgebildet. Neben einer kostengünstigeren Lösung für Kleinserien werden mit einer solchen Konstruktion vorteilhaft auch geringere Karosseriegewichte und Verbesserungen beim Korrosionsschutz erreicht.

Solche Knotenelemente als Leichtmetall-Gußteile sind in ihrer Geometrie unregelmäßig mit unterschiedlichen Wandstärken, Verstärkungsrippen, geschwungenen und kompliziert gestalteten Flächen ausgeführt, um die Verbindung zu meist mehreren Leichtmetall-Strangprofilen mit geeigneten Übergängen in der Festigkeit und Steifigkeit durchführen zu können.

Bei solchen räumlich komplizierten Gebilden treten bei der Konstruktion, bei der Erstellung der Modelle und der Gußwerkzeuge, bei Kontrollen und vor allem bei der Montage Probleme auf, da meist keine geeignete und reproduzierbare, geometrisch einfache Grundstruktur vorhanden ist, von der ausgehend die Konstruktion, Bemaßung, Kontrolle, Fixierung, etc. durchführbar ist.

Für einen Karosserieaufbau mit geringen Toleranzen ist es schwierig, die kompliziert geformten Knotenelemente lagerichtig im Raum und die verbindenden Strangpreßprofile zuzuordnen. Der Grund dafür liegt in der meist komplizierten Geometrie der Knotenelemente, die meist keine für eine lagerichtige Halterung in einer Montagevorrichtung gut geeigneten Flächen aufweisen. Zudem ist durch die komplizierte Geometrie auch die Kontrolle auf Maßhaltigkeit der Teile schwierig, so daß auch dadurch relativ große Toleranzen in Kauf genommen werden müssen.

Es ist bekannt (FR 556 458 A), zwei flächige Bauteile an einem Fahrzeug mit einer zentralen Schraube lösbar zu verbinden, wobei die Bauteile durch kegelförmige Erhebungen und entsprechend geformte Vertiefungen als Justierhilfe und Verdrehsicherung ineinandergreifen. Ein Hinweis auf eine Montage einer Fahrzeugkarosserie aus Knotenelementen und Hohlprofilen ist nicht gegeben.

Es ist weiter ein Verfahren zur Herstellung einer Fahrzeugkarosserie bekannt (DE 3 413 228 A1), bei dem die Fahrzeugkarosserie ohne Mittelsäule aufgebaut und fertig lackiert wird. Durch den mittelsäulenfreien Ausschnitt werden Ausstattungsteile in den Fahrgastraum eingeführt und anschließend wird die Mittelsäule eingesetzt und mit der Fahrzeugkarosserie verbunden. Diese Verbindung erfolgt über eine konische Steckverbindung. Eine lagerichtige Zuordnung von Knotenelementen in einer Montagevorrichtung erfolgt hier nicht.

Aufgabe der Erfindung ist es, ein Verfahren zur Montage einer Fahrzeugkarosserie mit einer Tragstruktur aus Hohlprofilen und Knotenelementen vorzuschlagen, das einfach durchführbar ist und zu maßhaltigen Fahrzeugkarosserien führt.

Diese Aufgabe wird mit den kennzeichnenden Merkmalen des Anspruchs 1 gelöst.

Gemäß Anspruch 1 sind an jeweils einer Gußteilwand der Knotenelemente bzw. Gußteile wenigstens zwei in einem Abstand angeordnete Masterpunkte als angeformte Erhebungen und/oder eingeformte Vertiefungen angebracht. Die Gußteile werden über die Masterpunkte in der lagerichtigen Stellung im Raum mit einer Montagevorrichtung gehalten. Dann werden die Strangprofile mit den Gußteilen durch Verschweißen oder Verkleben verbunden.

Vorteilhaft kann mit diesem Verfahren eine Punktstruktur der Karosserie aus den Knotenelementen im Raum durch Halterung in einer Montagevorrichtung aufgebaut werden. Die Knotenelemente liegen durch die Halterung über die Masterpunkte lagerichtig mit nur geringen Toleranzen im Raum, so daß dadurch bei einer einfachen Halterung maßhaltige Karosserien mit geringen Toleranzen hergestellt werden können. Erst wenn die Verbindung der Knotenelemente über die Strangpreßprofile durchgeführt wurde und beispielsweise ein verwendeter Kleber ausgehärtet ist, wird die gesamte Rahmenstruktur der Karosserie aus der Montagevorrichtung genommen.

Mit Anspruch 2 wird vorgeschlagen, daß drei, eine Dreiecksfläche aufspannende, zugeordnete Masterpunkte vorgesehen sind. Dadurch ist eine Fläche am Gußteil bestimmt, von der ausgehend alle für eine lagerichtige Stellung im Raum erforderlichen Zuordnungen möglich sind. Bei einem mehr flächigen Gußteil wird zweckmäßig auch eine solche, durch Masterpunkte bestimmte Fläche in diese Ebene gelegt. Bei kompliziert ausgeführten Gußteilen können jedoch auch weitere Masterpunkte zweckmäßig sein.

In einer besonders bevorzugten Ausführungsform sind die Masterpunkte nach Anspruch 3 als kegelförmige Butzen ausgebildet. Mit solchen Butzen ist ein Gußteil einfach in einer Montagevorrichtung zu fixieren und zu zentrieren. Auch eine formschlüssige Kraftübertragung ist durch solche Butzen einfach durchführbar, da sich wegen des kegelförmigen Aufbaus die kraftübertragenden Flächen ohne Spiel anlegen. Eine gute Entformbarkeit ist ebenfalls gewährleistet.

Ein Gußteil mit kegelförmigen Butzen kann einfach in entsprechenden Montagevorrichtungen gehalten werden, wenn nach Anspruch 4 die Kegelachsen mehrerer Butzen in die gleiche Raumrichtung entsprechend der Anfügerichtung weisen.

In einer einfachen Ausbildung nach Anspruch 5 sind die als eingeformte Vertiefungen ausgeführten Masterpunkte zylindrische Bohrungen. Diese können auch durch die Gußteilwand durchgehend ausgeführt sein, so daß sie zusätzlich zur Aufnahme von Verschraubungen dienen können.

In einer bevorzugten Ausführungsform nach Anspruch 6 sind jedoch solche Bohrungen, ähnlich wie die kegeligen Butzen, in deren Negativform als konische Bohrungen ausgebildet. Damit ergeben sich auch hier die entsprechenden Vorteile bei einer Fixierung und Zentrierung sowie formschlüssigen Kraftübertragung, wenn die Gegenteile entsprechend kegelig ausgeführt sind.

Auch bei der Ausführung der Masterpunkte als Bohrungen ist es nach Anspruch 7 vorteilhaft, deren Achsen in der gleichen Raumrichtung auszurichten, damit die Teile einfach zusammengefügt werden können.

Nach Anspruch 8 sind die Masterpunkte bevorzugt an solchen Bereichen am Gußteil anzubringen, wo dieses durch große Wanddicken und/oder Verrippungen besonders steif ausgeführt ist. Damit wird eine gute Maßhaltigkeit der Masterpunkte untereinander gewährleistet.

Anhand einer Zeichnung wird ein Ausführungsbeispiel der Erfindung mit weiteren Einzelheiten, Merkmalen und Vorteilen näher erläutert.

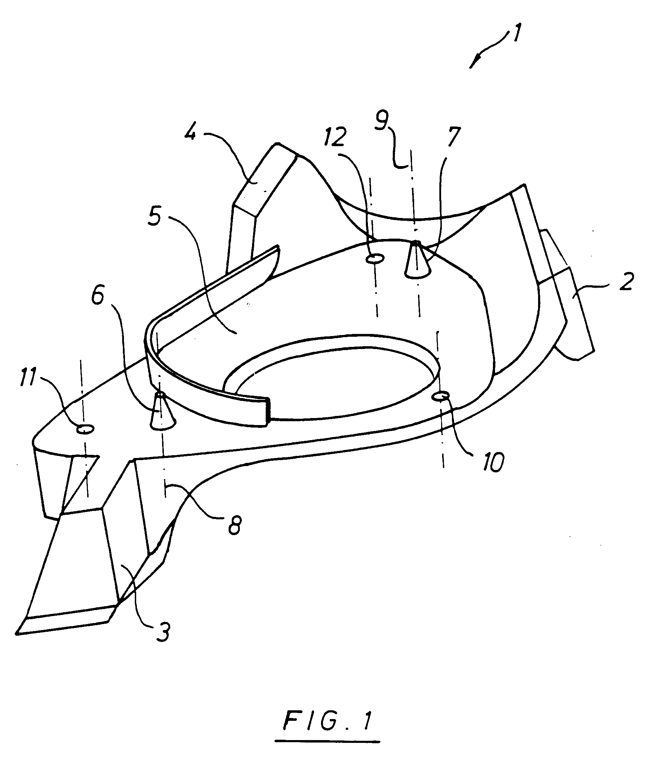

Die einzige Fig. zeigt ein Gußteil 1 aus Leichtmetall als Federbeinaufnahme. Dieses Gußteil 1 stellt ein Knotenelement der Tragstruktur einer Fahrzeugkarosserie dar und ist als Leichtmetall-Gußteil ausgeführt. Es sind drei seitliche Ansätze 3, 4, 5 zu erkennen, an denen zum Aufbau der Tragstruktur (nicht dargestellte) Aluminium-Strangprofile angeschlossen werden. Der mittlere, topfförmig etwas aufgewölbte Teil 5 dient zur Abstützung und Befestigung eines von unten her angesetzten Federbeins.

Das Gußteil 1 als Federbeinaufnahme ist ersichtlich in seiner Geometrie relativ unregelmäßig und kompliziert ausgeführt, um die Anforderungen an die Anbindung der Leichtmetall-Strangprofile, den Steifigkeitsverlauf und die Krafteinleitung zu erfüllen.

In einer oberen Ebene sind im Abstand als Masterpunkte zwei kegelförmige Butzen 6 und 7 angebracht, deren Kegelachsen 8 und 9 in die gleiche, etwa senkrechte Raumrichtung weisen.

Weiter sind drei, etwa eine Dreiecksfläche bestimmende Bohrungen 10, 11, 12 angebracht, deren Achsen ebenfalls in die gleiche Raumrichtung weisen. Auch diese Bohrungen 10, 11, 12 sind von vornherein im Gußteil eingeformt und stellen Masterpunkte dar.

Sowohl die Butzen 6, 7 als auch die Bohrungen 10, 11, 12 liegen in dickwandigen bzw. verrippten Bereichen des Gußteils 1.

Das Gußteil 1 wäre ersichtlich ohne die Butzen 6, 7 und die Bohrungen 10, 11, 12 wegen der unregelmäßigen Form nur schwierig im Raum, beispielsweise zum Anschluß für die Leichtmetall-Strangprofile, zu justieren und zu fixieren. Über die Butzen 6, 7 und/oder Bohrungen 10, 11, 12, die Vermaßungsnullpunkte darstellen, ist dagegen eine Justierung und Fixierung in einer geeigneten Raumstellung bei Verwendung einer entsprechenden Vorrichtung einfach möglich. Ebenso einfach sind Kontroll- und Vermessungsarbeiten am Gußteil möglich, wenn dieses an den Masterpunkten eingespannt und befestigt wird.

Im vorliegenden Fall sind die als Masterpunkte ausgeführten Bohrungen 10, 11, 12 zugleich auch als Aufnahmen für die Verschraubungen verwendbar, mit denen das Federbein befestigt wird. Weitere Anschlußteile können von oben her auf die Butzen 6 und 7 formschlüssig und zentriert aufgesetzt und verschraubt werden, wodurch zwischen diesen verschraubten Bauteilen zusätzlich eine formschlüssige Kraftübertragung mit reduzierten Spannungsspitzen hergestellt ist.

## Patentansprüche

1. Verfahren zur Montage einer Fahrzeugkarosserie,
mit einer Tragstruktur aus Hohlprofilen als Strangpreßprofile und Knotenelementen als Gußteile aus Leichtmetall,
dadurch gekennzeichnet,
daß an jeweils einer Gußteilwand der Gußteile (1) wenigstens zwei in einem Abstand angeordnete Masterpunkte als angeformte Erhebungen (6, 7) und/oder eingeformte Vertiefungen (10, 11, 12) angebracht sind,
daß die Gußteile (1) über die Masterpunkte in der lagerichtigen Stellung im Raum mit einer Montagevorrichtung gehalten werden und
daß dann die Strangprofile mit den Gußteilen durch Verschweißen oder Verkleben verbunden werden.

2. Verfahren nach Anspruch 1, dadurch gekennzeichnet, daß drei, eine Dreiecksfläche aufspannende, zugeordnete Masterpunkte (10, 11, 12) vorgesehen sind.

3. Verfahren nach Anspruch 1 oder 2, dadurch gekennzeichnet, daß die als angeformte Erhebungen ausgeführten Masterpunkte kegelförmige Butzen (6, 7) sind.

4. Verfahren nach Anspruch 3, dadurch gekennzeichnet, daß die Kegelachsen (8, 9) der kegelförmigen Butzen (6, 7) in die gleiche Raumrichtung weisen.

5. Verfahren nach Anspruch 1 oder 2, dadurch gekennzeichnet, daß die als eingeformte Vertiefungen ausgeführten Masterpunkte zylindrische Bohrungen (10, 11, 12) sind.

6. Verfahren nach Anspruch 1 oder 2, dadurch gekennzeichnet, daß die als eingeformte Vertiefungen ausgeführten Masterpunkte konische Bohrungen sind.

7. Verfahren nach Anspruch 5 oder 6, dadurch gekennzeichnet, daß die Achsen der Bohrungen (10, 11, 12) in die gleiche Raumrichtung weisen.

8. Verfahren nach einem der Ansprüche 1 bis 7, dadurch gekennzeichnet, daß die Masterpunkte (6, 7; 10, 11, 12) am Gußteil (1) in Bereichen großer Wanddicken und/oder Verrippungen angebracht sind, wo das Gußteil (1) besonders steif ausgeführt ist.

## Claims

1. Method for assembling a vehicle bodyshell,
having a load-bearing structure composed of hollow extruded profiles and cast light alloy gusset elements,
characterised in that
at least two spaced master points in the form of moulded bumps (6, 7) and/or depressions (10, 11, 12) are incorporated on one respective cast wall of the cast parts (1),
the cast parts (1) are held in the correct spatial position with an assembly fixture by means of the master points, and
the extruded profiles are then joined to the cast parts by welding or bonding.

2. Method according to claim 1, characterised in that three associated master points (10, 11, 12) are provided, which support a triangular area.

3. Method according to claim 1 or 2, characterised in that the master points constructed as moulded bumps are cone-shaped slugs (6, 7).

4. Method according to claim 3, characterised in that the cone axes (8, 9) of the cone-shaped slugs (6, 7) point in the same direction in space.

5. Method according to claim 1 or 2, characterised in that the master points constructed as moulded depressions are cylindrical bores (10, 11, 12).

6. Method according to claim 1 or 2, characterised in that the master points constructed as moulded depressions are conical bores.

7. Method according to claim 5 or 6, characterised in that the axes of the bores (10, 11, 12) point in the same direction in space.

8. Method according to any of claims 1 to 7, characterised in that the master points (6, 7; 10, 11, 12) are incorporated on the cast part (1) in areas of very thick material and/or ribbing, where the cast part (1) is of particularly rigid construction.

## Revendications

1. Procédé de montage d'une carrosserie d'automobile
comprenant une structure porteuse en profilés creux sous forme de profilés files et des éléments de jonction sous forme de pièces en fonte de métal léger,
caractérisé
en ce qu'il est prévu, sur une paroi de chaque pièce en fonte (1), au moins deux points de positionnement disposés à distance mutuelle, constitués par des saillies (6, 7) et/ou des cavités (10, 11, 12) formées au moulage,
en ce que les pièces en fonte (1) sont maintenues dans la position correcte dans l'espace, au moyen des points de positionnement, avec un dispositif de montage,
en ce que les profilés filés sont ensuite assemblés aux pièces en fonte par soudage ou par collage.

2. Procédé selon la revendication 1, caractérisé en ce qu'il est prévu trois points de positionnement conjugués (10, 11, 12), définissant une surface triangulaire.

3. Procédé selon la revendication 1 ou 2, caractérisé en ce que les points de positionnement réalisés sous forme de saillies formées au moulage sont des tenons coniques (6, 7).

4. Procédé selon la revendication 3, caractérisé en ce que les axes de cône (8, 9) des tenons coniques (6, 7) sont orientés dans la même direction dans l'espace.

5. Procédé selon la revendication 1 ou 2, caractérisé en ce que les points de positionnement réalisés sous forme de cavités formées au moulage sont des forures cylindriques (10, 11, 12).

6. Procédé selon la revendication 1 ou 2, caractérisé en ce que les points de positionnement réalisés sous forme de cavités formées au moulage sont des forures coniques.

7. Procédé selon la revendication 5 ou 6, caractérisé en ce que les axes des forures (10, 11, 12) sont orientés dans la même direction dans l'espace.

8. Procédé selon l'une quelconque des revendications 1 à 7, caractérisé en ce que les points de positionnement (6, 7; 10, 11, 12) sur la pièce en fonte (1) sont placés dans des régions de plus grande épaisseur de paroi et/ou dans des nervures, où la pièce en fonte (1) est particulièrement rigide.
